# EUROPÄISCHE PATENTSCHRIFT

(11) **EP 0 980 169 B1**
(45) Veröffentlichungstag und Bekanntmachung des Hinweises auf die Patenterteilung: **04.02.2004**
(21) Anmeldenummer: 99440216.2
(22) Anmeldetag: 29.07.1999
(51) Int. Cl.: H04L 25/49, H04L 27/18, H04L 27/22

(54) **Informationsübertragung mittels differentieller Manchesterkodierung und Phasensprungmodulation**
Information transmission by means of differential Manchester coding and phase shift keying
Transmission d'information par codage manchester différentiel et modulation par déplacement de phase

(30) Priorität: 08.08.1998 DE 19835952
(43) Veröffentlichungstag der Anmeldung: 16.02.2000
(73) Patentinhaber: ALCATEL, 75008 Paris (FR)
(72) Erfinder: Heide, Josef, 73635 Rudersberg (DE)
(74) Vertreter: Menzietti, Domenico, Dipl.-Ing

(56) Entgegenhaltungen:
- US-A- 4 156 847
- US-A- 4 281 412
- US-A- 4 779 129
- YOSHIDA S ET AL: "ANTI-MULTIPATH MODULATION TECHNIQUE - MANCHESTER-CODED PSK (MC-PSK)" COMMUNICATIONS - SOUND TO LIGHT. SEATTLE, JUNE 7 - 10, 1987, INTERNATIONAL CONFERENCE ON COMMUNICATIONS, NEW YORK, IEEE, US, Bd. 3, 7. Juni 1987 (1987-06-07), Seiten 1371-1375, XP000793520
- JU K S ET AL: "Comparative evaluation of the performance of anti-multipath modulation techniques for digital mobile radio systems" VEHICULAR TECHNOLOGY CONFERENCE, 1994 IEEE 44TH STOCKHOLM, SWEDEN 8-10 JUNE 1994, NEW YORK, NY, USA,IEEE, 8. Juni 1994 (1994-06-08), Seiten 1557-1561, XP010123395 ISBN: 0-7803-1927-3
- YOSHIDA S ET AL: "A NOVEL ANTI-MULTIPATH MODULATION TECHNIQUE DSK" GLOBECOM. NEW ORLEANS, DEC. 2 - 5, 1985, PROCEEDINGS OF THE GLOBAL TELECOMMUNICATIONS CONFERENCE AND EXHIBITION(GLOBECOM), NEW YORK, IEEE, US, Bd. 3, Dezember 1985 (1985-12), Seiten 1094-1098, XP000794855
- JIN-SOO LEE ET AL: "A novel phase-compensated PSK modulation technique for PCS" 1995 FOURTH IEEE INTERNATIONAL CONFERENCE ON UNIVERSAL PERSONAL COMMUNICATIONS RECORD. GATEWAY TO THE 21ST. CENTURY. TOKYO, NOV. 6 - 10, 1995, IEEE INTERNATIONAL CONFERENCE ON UNIVERSAL PERSONAL COMMUNICATIONS, NEW YORK, IEEE, US, Bd. CONF. 4, 6. November 1995 (1995-11-06), Seiten 128-132, XP010160513 ISBN: 0-7803-2955-4

## Beschreibung

Die Erfindung betrifft ein Sendeteil zum Übertragen von Information mittels Phasenmodulation, insbesondere 2-PSK. 2-PSK ist eine digitale Phasenmodulation mit zwei unterschiedlichen Zuständen des in der Phase modulierten Signals. Diese ist gut bekannt, und der Fachmann weiß, daß das demodulierte Signal nicht eindeutig ist und daher besondere Maßnahmen zur Herstellung der Eindeutigkeit getroffen werden müssen, nämlich eine Phasenrückgewinnung vorgenommen werden muß. Nach der Demodulation ist nämlich nicht bekannt, ob ein Bit den Wert 0 oder 1 hat. Es ist bei 2-PSK nur bekannt, daß das demodulierte Signal sich aus Bits mit zwei unterschiedlichen Werten zusammensetzt. Zur Herstellung der Eindeutigkeit kann beispielsweise das unmodulierte Hochfrequenzsignal mit übertragen werden. Als anderer Lösungsansatz kann dienen, daß zumindest bei Beginn einer Nachrichtenübertragung eine der Empfangsseite bekannte Bitfolge übertragen wird, so daß es auf der Empfangseite möglich ist, die Polarität der demodulierten Bits so einzustellen, daß sich genau diese Bitfolge ergibt.

Durch Motorola: LonWorks Section 4, Seite 6 ist eine Codierung, nämlich der Differentielle Manchestercode (Differential Manchester Code) bekannt, der gemäß Angabe an der zitierten Stelle umempfindlich gegen Umkehrung der Polarität auf dem Übertragungsweg ist. Dies besagt nichts anderes, als daß bei einem Vertauschen der zwei Leiter eines elektrischen Übertragungswegs die sichere Nachrichtenübermittlung nicht beeinträchtigt wird.

In US-A-4 156 847 ist ein Verfahren zum Bestätigen von Übertragungen in einem CATV System offenbart. Daten werden in sogenannte Bi-Phase Space Signale umgesetzt, danach PSK moduliert und anschließend zu einem sogenannten Head End des CATV Systems übertragen. Im Head End werden die empfangenen Signale mittels eines Modems demoduliert und anschließend mittels einer CPU verarbeitet.

In Yoshida S et al.: "Anti-Multipath Modulation Technique-Manchester-Coded PSK (MC-PSK)" Communications - Sound to Light, Seattle, June 7 - 10, 1987, International Conferenceon Communications, New York, IEEE, US, Bd. 3, 7. Juni 1987 ist eine Manchester-Coded PSK offenbart. Ein Modulator für eine MC-PSK beinhaltet eine Reihenschaltung aus einem Inverter, einem differentiellen Kodierer, einem Manchester Kodierer und einem Multiplizierer, der ein Trägersignal mit dem Ausgangssignal des Manchester Kodierers multipliziert. Ein zugehöriger Demodulator beinhaltet eine Reihenschaltung aus einem Multiplizierer und einem Tiefpassfilter, wobei im Multiplizierer das Empfangssignal mit dem um die Zeitspanne T verzögerten Empfangssignal multipliziert wird.

Der Erfindung liegt die Aufgabe zugrunde, eine konkrete Schaltungsanordnung zur Durchführung des obigen, allgemein bekannten Modulationsverfahrens bereitzustellen. Diese Aufgabe wird durch ein Sendeteil gemäß Patentanspruch 1 gelöst.

Die Erfindung ist nicht darauf beschränkt, daß der Differential Manchester Code genau in der Form, in der er definiert ist, verwendet wird. Vielmehr ist für die Erfindung jeder Code anwendbar, der ähnlich wie der soeben genannte Code unabhängig von der Phasenlage stets die Unterscheidung der Bits 0 und 1 in eindeutiger Weise gestattet. Hierzu könnte beispielsweise bei dem Differential Manchester Code die Bedeutung der Bits 0 und 1 vertauscht werden; auch ein derartiger modifizierter Code würde für die Erfindung anwendbar sein.

Bei der Erfindung ist von Vorteil, daß der empfangsseitige Aufwand, insbesondere der gerätetechnische Aufwand gegenüber der üblichen 2-PSK-Demodulation verringert ist.

Bei einer Ausführungsform des erfindungsgemäßen Sendeteils wird ein Pilotton übertragen, wobei von Vorteil ist, daß dieser Pilotton (der bekanntlich zum Einstellen eines bestimmten Pegels des Signals auf der Empfangsseite verwendet wird), eine Nachricht übertragen kann.

Weitere Merkmale und Vorteile der Erfindung ergeben sich aus der nachfolgenden Beschreibung eines Ausführungsbeispiels der Erfindung anhand der Zeichnung, die erfindungswesentliche Einzelheiten zeigt, und aus den Ansprüchen. Es zeigen:
- Fig. 1: ein Blockschaltbild des erfindungsgemäßen Sendeteils,
- Fig. 2: ein Blockschaltbild von grundsätzlichen Einrichtungen eines Empfangsteils korrespondierend zum erfindungsgemäßen Sendeteil,
- Fig. 3: ein Blockschaltbild eines Ausführungsbeispiels eines Empfangsteils korrespondierend zum erfindungsgemäßen Sendeteil,
- Fig. 4: eine Darstellung der Bits 0 und 1 gemäß dem Differentiellen Manchestercode (Differential Manchester Code).

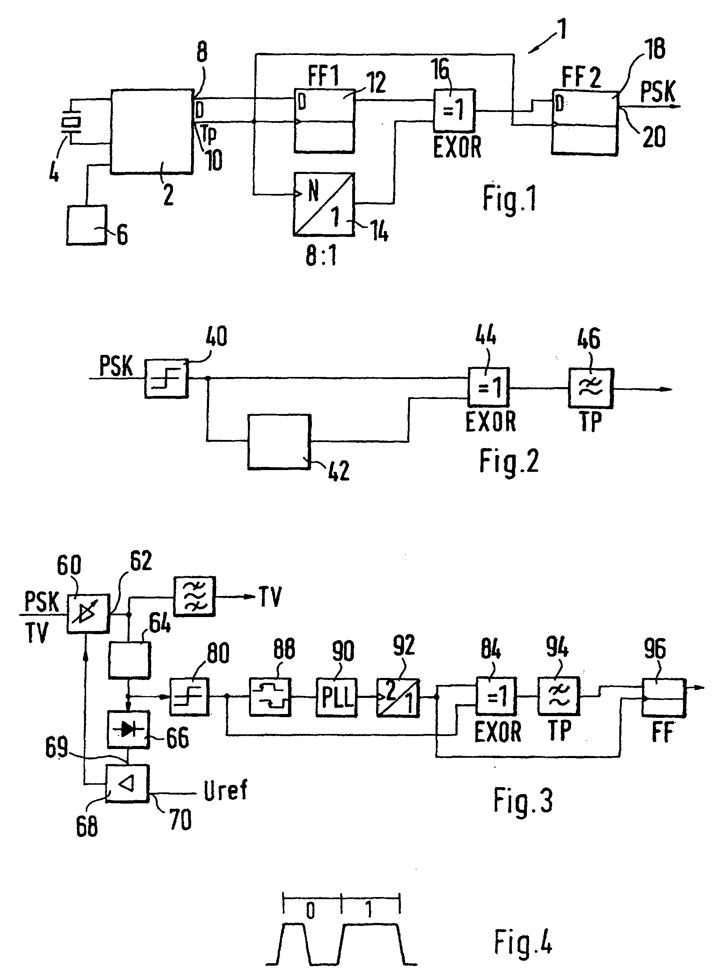

In Fig. 1 weist ein erfindungsgemäßes Sendeteil 1 einen Datenprozessor 2 auf, dessen Taktgeber durch einen Schwingquarz 4 gesteuert ist. In einer beliebigen Datenquelle 6 werden Daten erzeugt, die dem Datenprozessor 2 zugeführt werden. Im Datenprozessor 2 werden die Daten in gemäß dem Differentiellen Manchestercode codierte Daten umgewandelt und an einem Datenausgang 8 ausgegeben. Ein Taktsignal wird vom Prozessor 2 an einem Taktausgang 10 ausgegeben. Die Daten vom Datenausgang 8 werden in einem ersten Flipflop 12 (FF1) nachgetaktet, um sie in eine exakte zeitliche Lage zu bringen. Der Prozessortakt vom Taktausgang 10 wird durch einen Taktteiler 14 im Beispiel im Verhältnis 8 : 1 geteilt (dieses Teilungsverhältnis hat keinerlei notwendigen Zusammenhang mit der üblichen Darstellung von Nachrichten in Form von Bytes, die jeweils 8 Bits aufweisen). Das Ausgangssignal des ersten Flipflops 12 wird einem der zwei Eingänge einer Exklusiv-Oder-Schaltung 16 (EXOR) zugeführt, und dem anderen Eingang dieser Schaltung 16 wird das Ausgangssignal des Taktteilers 14 zugeführt. Die Exklusiv-Oder-Schaltung 16 gibt nur dann ein Ausgangssignal mit dem Wert logisch 1 aus, wenn genau eines ihrer Eingangssignale den Wert logisch 1 hat; dies ist durch das Symbol "= 1" im Inneren des Schaltungssymbols symbolisiert. Die Exklusiv-Oder-Schaltung 16 bewirkt eine vom Datenausgang des ersten Flipflops 12 gesteuerte Invertierung des Takts vom Ausgang des Taktteilers 14, jeweils im Nulldurchgang des Taksts. Das Ausgangssignal der Exklusiv-Oder-Schaltung 16 ist phasenmoduliert mit zwei um 180° unterschiedlichen Phasen, es liegt 2-PSK vor. Das Ausgangssignal der Exklusiv-Oder-Schaltung 16 wird einem zweiten Flipflop 18 (FF2) zugeführt, in dem Schaltspitzen, die bei realen Exklusiv-Oder-Schaltungen erzeugt werden, beseitigt werden. Das am Datenausgang 20 des zweiten Flipflops 18 erscheinende Signal ist das bezüglich Schaltspitzen bereinigte und technisch weiter verarbeitbare, insbesondere über einen Datenkanal übertragbare phasenmodulierte Signal.

In der Anordnung nach Fig. 2 wird das empfangene, zu demodulierende phasenmodulierte Signal zunächst einem Komparator 40 zugeführt, der aus dem im Laufe der Übertragung möglicherweise verschliffenen und abgerundeten phasenmodulierten Signal wieder exakte Impulse mit konstanter Amplitude erzeugt. Eine Einrichtung 42 zur Taktrückgewinnung gewinnt aus dem den Komparator 40 an dessen Ausgang verlassenden Signal ein Taktsignal mit Tastverhältnis 1:1. Das den Komparator 40 verlassende Datensignal und das die Einrichtung 42 verlassende Taktsignal werden einer Exklusiv-Oder-Schaltung 44 an deren beiden Eingängen zugeführt, und diese Schaltung bewirkt eine Demodulation des phasenmodulierten Signals. Der Ausgang der Exklusiv-Oder-Schaltung 44 ist mit dem Eingang eines Tiefpasses 46 verbunden, an dessen Ausgang das demodulierte Datensignal, das dem Ausgangssignal am Ausgang 8 des Prozessors 2 der Fig. 1 entspricht oder dazu invertiert ist, zur Verfügung steht. Das Taktsignal am Ausgang der Einrichtung 42 hat die Taktfrequenz, wie sie am Ausgang des Taktteilers 14 der Anordnung nach Fig. 1 zur Verfügung steht.

Bei dem detaillierten Blockschaltbild der Fig. 3 gelangt das phasenmodulierte Signal, das zu demodulieren ist, zum Eingang eines Stellverstärkers 60, dessen Verstärkung einstellbar ist. Der Ausgang 62 des Stellverstärkers 60 ist über einen Bandpass 64 mit dem Eingang einer Gleichrichteranordnung 66 verbunden, an deren Ausgang ein der Amplitude am Ausgang 62 des Stellverstärkers 60 proportionales Signal ausgegeben wird. Dieses wird einem Regelverstärker 68 an dessen erstem Eingang 69 zugeführt, und einem Referenzeingang 70 des Regelverstärkers 68 wird eine Referenzspannung Uref zugeführt. Der Ausgang des Regelverstärkers 68 ist mit einem Stelleingang des Stellverstärkers 60 verbunden und verändert dessen Verstärkung. Auf diese Weise wird eine Regelung vorgenommen, die dafür sorgt, daß das Ausgangssignal der Gleichrichteranordnung 66 exakt gleich der Referenzspannung Uref ist. Dann hat das Ausgangssignal des Stellverstärkers 60 die für die weitere Bearbeitung erforderliche und gewünschte Amplitude.

Mit dem Ausgang des Bandpasses 64 ist ein Komparator 80 verbunden, dessen Funktion mit der des Komparators 40 der Fig. 2 vergleichbar ist. Das Datensignal vom Ausgang des Komparators 80 wird dem einen Eingang einer Exklusiv-Oder-Schaltung 84 zugeführt, deren anderem Eingang das für die Demodulation erforderliche Taktsignal zugeführt ist. Dieses wird gegenüber der Anordnung nach Fig. 2 in etwas aufwendigerer Weise gewonnen, und zwar wird das Ausgangssignal des Komparators 80 zunächst einem Flankendetektor 88 zugeführt, der die ansteigende und abfallende Flanke feststellt. Das Ausgangssignal des Flankendetektors 88 wird einem Eingang einer PLL-Schaltung 90 zugeführt, die ein Ausgangssignal mit der doppelten Taktfrequenz liefert. Bei diesem Ausgangssignal sind Lücken im Taktsignal ausgefüllt. Der Flankendetektor 88 bildet jeweils einen Impuls für jede der beiden Flanken (steigende Flanke und fallende Flanke). Ein Taktteiler 92 reduziert die Frequenz des Ausgangssignals der PLL-Schaltung 90 im Verhältnis 1 : 2 und erzeugt damit das Taktsignal mit der richtigen Frequenz und Taktverhältnis 1:1.

Wie auch bei der Anordnung nach Fig. 2 folgt der Exklusiv-Oder-Schaltung 84 ein Tiefpass, der hier das Bezugszeichen 94 trägt, und bei der Anordnung nach Fig. 3 wird das den Tiefpass 94 verlassende Signal noch durch ein Flipflop 96, dessen Takteingang das Taktsignal vom Ausgang des Taktteilers 92 zugeführt ist, spitzenfrei getaktet.

In Fig. 3 ist noch dargestellt, daß dem Eingang des Stellverstärkers 60 nicht nur das oben genannte phasenmodulierte Signal (PSK) zugeführt wird, sondern es wird gleichzeitig ein Nutzsignal, symbolisiert durch die Buchstaben TV, bei dem es sich im Beispiel um ein Signal im Frequenzbereich von 5 MHz bis 70 MHz für den upstream Kanal handelt (cablephone), zugeführt. Dieses Signal wird am Ausgang 62 des Stellverstärkers 60 ggf. durch einen Hochposs 100 entnommen. Der Stellverstärker 60 verstärkt das Nutzsignal TV in gleicher Weise wie das phasenmodulierte Signal. Das letztgenannte phasenmodulierte Signal stellt daher im Ausführungsbeispiel einen Pilotton dar, von dem bekannt ist, auf welche Amplitude er empfangsseitig verstärkt werden muß, damit auch das Nutzsignal die für seinen weiteren Gebrauch benötigte Amplitude erhält.

Fig. 4 zeigt die Darstellung der Bits 0 und 1 gemäß dem Differentiellen Manchestercode. Das Bit 0 zeichnet sich dadurch aus, daß der Bitmitte ein Übergang vorhanden ist. Das Bit 1 zeichnet sich dadurch aus, daß in der Bitmitte kein Übergang vorhanden ist. Zusätzlich sind an den Bitgrenzen Übergänge vorhanden. Wie leicht erkennbar ist, bewirkt eine Phasenumkehrung des Bits 0 oder des Bits 1 keinerlei Vertauschung der Bits selbst, weil auch nach der Phasenumkehrung beim Bit O der genannte Übergang vorhanden ist, beim Bit 1 ober nicht. Für die Erfindung können auch andere Codierungen verwendet werden, bei denen diese zuletzt geschilderte Eigenschaft vorhanden ist.

Wie aus der obigen Beschreibung des Ausführungsbeispiels deutlich wurde, weist die Empfangseinrichtung oder Demodulationseinrichtung keinerlei Einrichtungen auf, um eine bestimmte Phasenlage für das demodulierte Signal festzulegen. Der erfindungsgemäße Sendeteil ermöglicht daher eine Vereinfachung der empfangsseitigen Schaltung im Vergleich zu herkömmlichen Phasenmodulationsverfahren, bei denen die Phasenlage des gesendeten Signals wieder hergestellt werden muß.

Die obige Beschreibung dient der Erläuterung und soll den Schutzbereich der Erfindung nicht einschränken. Es wird nicht ausgeschlossen, daß die Erfindung auch bei anderen Modulationsverfahren als 2-PSK anwendbar ist.

## Patentansprüche

1. Sendeteil (1) zur Übertragung digitaler Daten mittels Phasenmodulation, beinhaltend:
eine Kodierungs-Schaltung zur Kodierung der Daten mittels eines Kodes, der unabhängig von der Phasenlage stets die Unterscheidung der Bits 0 und 1 in eindeutiger Weise gestattet,
eine Phasenmodulations-Schaltung zur Phosenmodulotion der kodierten Daten, wobei die Kodierungs-Schaltung einen Datenprozessor (2) beinhaltet zur Konvertierung von Eingangsdaten in Ausgangsdaten mittels eines Kodes, der unabhängig von der Phasenlage stets die Unterscheidung der Bits 0 und 1 in eindeutiger Weise gestattet, **dadurch gekennzeichnet, daß** der Datenprozessor (2) einen Dateneingang, einen Takteingang, einen Datenausgang (8) und einen Taktausgang (10) aufweist,
die Phasenmodulations-Schaltung zwei Flipflops (12, 18), eine Exklusiv-Oder-Schaltung (16) und einen N:1 Taktteiler (14) beinhaltet,
jedes Flipflop (12, 18) einen Dateneingang, einen Takteingang und einen Datenausgang aufweist, die Exklusiv-Oder-Schaltung (16) zwei Eingänge und einen Ausgang aufweist und der N:1 Taktteiler (14) einen Eingang und einen Ausgang aufweist,
der Datenausgang (8) des Datenprozessors (2) mit dem Dateneingang des ersten Flipflops (12) verbunden ist,
der Taktausgang (10) des Datenprozessors (2) mit dem Takteingang des ersten Flipflops, dem Takteingang des zweiten Flipflops (18) und dem Eingang des N:1 Taktteilers (14) verbunden ist,
der Datenausgang des ersten Flipflops (12) mit dem ersten Eingang der Exklusiv-Oder-Schaltung (16) verbunden ist,
der Ausgang des N:1 Taktteilers (14) mit dem zweiten Eingang der Exklusiv-Oder-Schaltung (16) verbunden ist, und
der Ausgang der Exklusiv-Oder-Schaltung (16) mit dem Dateneingang des zweiten Flipflops (18) verbunden ist.

2. Sendeteil (1) gemäß Anspruch 1, wobei der Kode, der unabhängig von der Phasenlage stets die Unterscheidung der Bits 0 und 1 in eindeutiger Weise gestattet, ein Differentieller Manchestercode ist.

## Claims

1. Transmitting section (1) for transmitting digital data by means of phase modulation, comprising:
an encoding circuit for encoding the data by means of a code that always permits the differentiation of the bits 0 and 1 in an unambiguous manner regardless of the phase position,
a phase-modulation circuit for the phase-modulation of the encoded data, wherein the encoding circuit comprises a data processor (2) for converting input data into output data by means of a code that always permits the differentiation of the bits 0 and 1 in an unambiguous manner regardless of the phase position,
**characterized in that** the data processor (2) has a data input, a clock input, a data output (8) and a clock output (10),
the phase-modulation circuit comprises two flip-flops (12, 18), an exclusive OR circuit (16) and an N:1 clock divider (14),
each flip-flop (12, 18) has a data input, a clock input and a data output,
the exclusive OR circuit (16) has two inputs and an output and the N:1 clock divider (14) has an input and an output,
the data output (8) of the data processor (2) is connected to the data input of the first flip-flop (12) ,
the clock output (10) of the data processor (2) is connected to the clock input of the first flip-flop, the clock input of the second flip-flop (18) and the input of the N:1 clock divider (14),
the data output of the first flip-flop (12) is connected to the first input of the exclusive OR circuit (16),
the output of the N:1 clock divider (14) is connected to the second input of the exclusive OR circuit (16), and
the output of the exclusive OR circuit (16) is connected to the data input of the second flip-flop (18).

2. Transmitting section (1) according to Claim 1, wherein the code that always permits the differentiation of the bits 0 and 1 in an unambiguous manner regardless of the phase position is a Differential Manchester Code.

## Revendications

1. Partie d'émission (1) pour la transmission de données numériques par modulation de phase, comprenant :
un circuit de codage pour le codage des données au moyen d'un code, qui permet toujours la différenciation des bits 0 et 1 de façon claire indépendamment de la position de phase,
un circuit de modulation de phase pour la modulation de phase des données codées, le circuit de codage contenant un processeur de données (2) pour la conversion de données d'entrée en données de sortie au moyen d'un code qui permet toujours la différenciation des bits 0 et 1 de façon claire indépendamment de la position de phase, **caractérisé en ce que** le processeur de données (2) présente une entrée de données, une entrée de rythme, une sortie de données (8) et une sortie de rythme (10) et
le circuit de modulation de phase contenant deux flip-flops (12, 18), un circuit OU exclusif (16) et un diviseur de rythme (14) N:1,
chaque flip-flop (12, 18) présentant une entrée de données, une entrée de rythme et une sortie de données, le circuit OU exclusif (16) présentant deux entrées et une sortie et le diviseur de rythme N:1 (14) présentant une entrée et une sortie,
la sortie de données (8) du processeur de données (2) étant reliée à l'entrée de données du premier flip-flop (12),
la sortie de rythme (10) du processeur de données (2) étant reliée à l'entrée de rythme du premier flip-flop, à l'entrée de rythme du second flip-flop (18) et à l'entrée du diviseur de rythme N:1 (14),
la sortie de données du premier flip-flop (12) étant reliée à la première entrée du circuit OU exclusif (16),
la sortie du diviseur de rythme N:1 (14) étant reliée à la seconde entrée du circuit OU exclusif (16), et
la sortie du circuit OU exclusif (16) étant reliée à l'entrée de données du second flip-flop (18)

2. Partie d'émission (1) selon la revendication 1, le code, qui permet toujours la différenciation des bits 0 et 1 de façon claire indépendamment de la position de phase, étant un code différentiel de Manchester.
